# EUROPÄISCHE PATENTANMELDUNG

(11) **EP 0 652 038 A1**
(43) Veröffentlichungstag der Anmeldung: **10.05.1995**
(21) Anmeldenummer: 94117478.1
(22) Anmeldetag: 05.11.1994
(51) Int. Cl.: B01D 53/14

(54) **Verfahren zur Abtrennung von organischen Komponenten aus Abluft**

(30) Priorität: 07.11.1993 DE 4338003
(71) Anmelder: DYNAMIT NOBEL AKTIENGESELLSCHAFT, D-53840 Troisdorf (DE)
(72) Erfinder: Ehresmann, Klaus, Dr. Dipl.-Chem., D-53757 St. Augustin (DE)

(57) **Zusammenfassung**

Gegenstand der Erfindung ist ein Verfahren zur Abtrennung von organischen Komponenten aus Abluft, wobei man in einer ersten Abtrennungsstufe (1) die Abluft mit einem hochsiedendem Waschöl (I) in Kontakt bringt und das mit organischen Komponenten beladene Waschöl (I) regeneriert, wobei man in einer zweiten Abtrennungsstufe (2) den Abluftgasstrom der ersten Abtrennungsstufe mit einem weiteren Waschöl (II) in Kontakt bringt und aus dem Verfahren ausschleust.

Die Erfindung erlaubt in der zweiten Abtrennungsstufe (2) den Einsatz von physikalisch-chemisch weniger stabilen Waschölen (II), beispielsweise Pflanzenölen, die in aller Regel wesentlich preisgünstiger sind als herkömmliche synthetische Waschöle (I), die in der ersten Absorptionsstufe eingesetzt werden.

## Beschreibung

Gegenstand der Erfindung ist ein Verfahren zur Abtrennung von organischen Komponenten aus Abluft, insbesondere ein absorptives Verfahren zur weitreichenden Geruchsminderung von mit flüchtigen organischen Stoffen beladener Abluft.

Die Gasreinigung und Gastrennung durch Absorption ist beispielsweise aus Ullmanns Encyclopädie der technischen Chemie 4. Auflage, Band 2, Seiten 575 bis 599 bekannt. Demgemäß versteht man unter Absorption die vollständige oder teilweise Aufnahme eines Gases oder Dampfes bei dessen Durchleiten durch eine Waschflüssigkeit. Hauptanwendungsgebiet der Absorption ist die Reinigung von Gasen oder die Trennung von Gasgemischen. Eine technische Gasabsorptions- oder Waschanlage besteht aus wenigstens zwei wichtigen Teilen, einem Gaswaschturm, dem Absorber und einem sogenannten Regenerator, in dem das Gas aus dem damit beladenen Waschmittel desorbiert wird, das heißt ausgetrieben wird, und das Waschmittel wiederverwendbar gemacht wird.

In Spezialfällen, wo es die Wirtschaftlichkeit erlaubt, wird aus Gründen der Einfachheit das Waschmittel nur einmal zur Absorption verwendet und das erschöpfte Waschmittel ausgeschleust.

Die Regeneration der Waschlösungen ist ein ebenso wichtiger Teil eines technischen Gasabsorptionsverfahrens wie die Absorption, unterscheidet sich aber von dieser durch ihre Mannigfaltigkeit und muß der Funktion des Waschmittels angepaßt sein. Bei physikalischen und physikalisch-chemischen Druckwäschen setzt es sich in der Regel aus der Entspannung des Waschmittels, in der Regel auf Atmosphärendruck und im Ausgasen des nach dem Entspannen noch gelöst verbliebenen Gasrestes zusammen. Diese Desorption kann üblicherweise bei normaler oder erhöhter Temperatur stattfinden.

Die Bereitstellung großer Gasmengen in der chemischen Industrie bei oft extrem hohen Reinheitsanforderungen für beispielsweise katalytische Synthesen oder für die Heizgasindustrie erfordert Großgasabsorptionsanlagen, da der Umsatz zwischen einer gasförmigen und einer flüssigen Phase im allgemeinen langsamer verläuft als der eines gleichen Aggregatzustandes, so daß hier relativ große Reaktionsräume, das heißt Waschanlagen, benötigt werden. Um den Stoffaustausch zu verbessern, stehen dem Techniker weitere mechanische Hilfen zur Verfügung, die an sich aus dem Stand der Technik bekannt sind.

Für eine gestellte technische Aufgabe wird allgemein ein Absorptionsverfahren ausgewählt, das zunächst als das geeignetste erscheint. Dabei bestehen zwischen extremer physikalischer Absorption einerseits und chemischer Absorption ohne Regeneration andererseits Übergänge, die sogenannten physikalisch-chemischen Wäschen, die Lösungsmittel mit zugleich physikalischem Absorptionsvermögen als auch reversibler chemischer Bindung verwenden, sowie rein chemische Wäschen mit thermischer Regeneration des Waschmittels oder chemischer Regeneration.

In Fällen, wo ein einziges Waschverfahren für die zu erzielende Gasreinheit nicht ausreicht, führen Kombinationen von zwei oder bisweilen noch mehr Verfahren zum Ziel.

Herkömmliche Verfahren zur Abreicherung von mit flüchtigen organischen Stoffen beladener Abluft, die auf dem Prinzip der absorptiven Wäsche mittels organischer Hochsieder (Waschöle) beruhen, mit Regeneration desselben in einem Kreislaufprozess, sind für eine effiziente Geruchsminderung, wie sie beispielsweise durch neueste gesetzliche Auflagen und Grenzwerte gefordert wird, wenig geeignet. Besonders bei Lackieranlagen, beispielsweise in der Automobilindustrie, in denen häufig Lacksysteme auf der Basis geruchsintensiver organischer Lösungsmittel eingesetzt werden, stellt die Einhaltung der gesetzlichen Grenzwerte ein bedeutendes Problem dar. Die Ursache für den begrenzten Effekt der im Stand der Technik eingesetzten Verfahren ist diesen inherent, da bei der destillativen Regeneration des Waschöls die darin enthaltenen flüchtigen Stoffe nicht vollständig entfernt werden, sondern immer ein gewisser Restgehalt in dem Waschöl verbleibt. Bei erneuter Zufuhr des Regenerats in die Absorbereinheit, die nach dem Prinzip der Gegenwäsche über Kopf erfolgt, erfährt die austretende Luft im Rahmen des sich einstellenden Verteilungsvorgangs mit dem Waschöl eine Beladung mit den flüchtigen organischen Stoffen, deren Gehalt im wesentlichen durch den Restgehalt des, aus der Destillationseinheit zugeführten Waschöls bestimmt wird. Aufgrund der bekannten logarithmischen Abhängigkeit der Geruchswahrnehmung von der Stoffkonzentration (Wagner-Fechtnersches Gesetz) reicht der durch diesen Effekt limitierte Wirkungsgrad herkömmlicher Absorber in der Regel nicht aus, um die geforderten gesetzlichen Geruchsgrenzwerte einzuhalten.

Die Problematik des begrenzten Wirkungsgrades von Verfahren zur Abtrennung von organischen Komponenten aus Abluft ist im Fachschrifttum allgemein bekannt. Zu ihrer Behebung wurde beispielsweise in der DE 40 40 334 A1 ein Verfahren und eine Vorrichtung zur Rückgewinnung von Lösungsmitteln oder dergleichen aus einem Abluftstrom beschrieben. Gegenstand dieser Druckschrift ist ein Verfahren zur Rückgewinnung von Lösungsmittel oder dergleichen aus einem Abluftstrom, bei dem der, das Lösungsmittel enthaltende Abluftstrom durch einen Absorber geführt und darin das Lösungsmittel mittels eines hochsiedenden Waschöls ausgewaschen wird, bei dem das mit dem Lösungsmittel angereicherte Waschmittel anschliessend erwärmt, in einer Destillationskolonne der größte Teil des Lösungsmittels abdestilliert bzw. einer Flashverdampfung unterzogen und danach kondensiert wird und bei dem das noch eine Restkonzentration an Lösungsmittel enthaltene Waschöl erneut dem Absorber zugeführt wird. Um zu erreichen, daß ohne Erhöhung des Aufwandes für die Destillationskolonne und damit auf wirtschaftlich vertretbarer Weise die Reingaskonzentration des, den Absorber verlassenen Abluftstroms verbessert wird, wird das aus der Abdestillationskolonne austretende und noch eine verhältnismäßig hohe Restkonzentration an Lösungsmittel enthaltende Waschöl vor seinem Eintritt in den Absorber im Gegenstrom in einem Stripper mit einem Gasstrom beaufschlagt und der Gehalt an Lösungsmittel weiter reduziert.

T. Pilhofer, VDI-Bericht Nr. 1034, 1993, Seite 263 ff. schlägt vor, eine Strippung, meist mit Dampf, direkt in der Rektifikationskolonne durchzuführen. Hier wird darüber hinaus beschrieben, die Absorption mit hochsiedendem Absorptionsmittel als Verfahren zur Entfernung organischer Komponenten aus Abluft für bestimmte Aufgabenstellungen einzusetzen. Neben dem Verfahren werden in dieser Druckschrift, die im praktischen Einsatz erprobten Absorptionsmittel vorgestellt. Die dadurch erzielbaren Verbesserungen reichen dennoch in vielen Fällen nicht aus, um die erforderliche Geruchsminderung, beispielsweise mit Werten von weniger als 150 Geruchseinheiten pro m³ Abluft zu erreichen. Darüber hinaus werden bei diesem Verfahren größere Mengen an frischem, umbeladenem Gas bzw. an Dampf benötigt, die unter Energieaufwand bereitgestellt werden müssen. Das beladene Gas muß anschließend wieder gereinigt werden. Der Dampf gelangt letztlich in kondensierter Form in die abzuscheidenden Lösungsmittel, und muß vor deren weiterer Verwendung erneut abgetrennt werden.

Auch ein Anschluß einer zweiten, nach dem gleichen Prinzip arbeitenden Waschkolonne an die erste Absorberstufe kann die erforderlichen hohen Abreinigungsgrade nicht erbringen, da die Restbeladung der gereinigten Luft auch hier letztlich durch die Restbeladung des Waschöls aus der Regenerationskolonne bestimmt wird.

In der DE-OS 36 12 259 wird ein Verfahren zur Abtrennung von Lösemitteldämpfen aus Abluft beschrieben, bei dem in einer ersten Reinigungsstufe die Absorption der Lösemitteldämpfe an Dimethylpolysiloxanöl mit niedrigem Oligomergehalt als Waschflüssigkeit vorgenommen wird. In einer zweiten Reinigungsstufe erfolgt eine adsorptive Nachreinigung der Abluft an einem festen Adsorbens. Eine zufriedenstellende, die neuesten gesetzlichen Auflagen erfüllende Abluftreinigung ist beim Einsatz dieses Adsorptionsverfahrens in der zweiten Reinigungsstufe in vielen Fällen nicht zu erreichen.

Dies gilt z.B. dann, wenn in der zu reinigenden Abluft Stoffe mit sehr unterschiedlichen Adsorptionskoeffizienten enthalten sind und die Belastung bzw. qualitative Zusammensetzung der Abluft schwankt. Hierbei kann es zu Verdrängungsreaktionen auf dem Adsorbermaterial kommen, verbunden mit einer Freisetzung bereits adsorbierter Stoffe in die gereinigte Abluft (Desorption aufgrund von Chromatographieeffekten).

Auch beim Vorhandensein polymerisationsfähiger Stoffe in der Abluft stoßen adsorptiv arbeitende Verfahren an ihre Grenzen, wenn es dadurch zu Verklebungen bzw. Verkrustungen und damit zu einem Funktionsverlust der wirksamen Adsorberoberfläche kommt.

Ein weiteres Problem stellen eventuell in der Abluft vorhandene organische Komponenten dar, deren Bindung an das Adsorbermaterial so stark ist, daß die üblicherweise durchgeführte Regeneration nach Beladung des Adsorbermaterials keinen oder nur schlechten Erfolg bringt, so daß das Adsorbens bereits nach einem oder wenigen Beladungszyklen entsorgt und durch neues Material ersetzt werden muß. Dies bedingt neben entsprechend hohen Kosten bei jeder Austauschreaktion entweder einen Betriebsstillstand oder eine entsprechend teurere mehrstraßige Auslegung der Anlage.

Weitere Verfahren zur Abtrennung von organischen Komponenten aus Abluft, insbesondere Verfahren zur Geruchsminderung, wie beispielsweise Biowäscher- oder Biofilterverfahren, sind mitunter in der Lage, je nach stofflicher Natur der Geruchsträger die geforderte Geruchsminderung zu erbringen, weisen jedoch gegenüber absorptiven Verfahren eine Reihe von anderen Nachteilen auf. Insbesondere sind hier die großen Reaktorvolumen zu nennen, die zur befriedigenden Absorption auch von schlecht wasserlöslichen Organika erforderlich sind. Höhere umzuwälzende Flüssigkeitsmengen und der Anfall von zu entsorgendem Überschuß-Belebtschlamm bei Biowäschern sind weiterhin zu nennen. Darüber hinaus sind auch die schlechte Steuerbarkeit, die Gefahr von Unterversorgung mit Stickstoff- und phosphorhaltigen Nährstoffen sowie Spurenelementen, die Gefahr der Austrocknung, die langen Generationszeiten nach Beeinträchtigungen des biologischen Bewuchses bei Biofiltern zu nennen. Darüber hinaus ist bei den hier genannten Verfahren bedeutsam, daß eine gewisse Verkeimung der gereinigten Abluft eintreten kann, was beispielsweise die Wiederverwendung der Abluft aus Arbeitsschutzgründen beeinträchtigen kann. Bei biologisch schlecht abbaubaren Geruchsstoffen versagen die Biowäscher- oder Biofilterverfahren gänzlich.

Die Aufgabe der vorliegenden Erfindung besteht darin, ein verbessertes Verfahren zur Abtrennung von organischen Komponenten aus Abluft zur Verfügung zu stellen, wobei insbesondere Geruchsverminderung der Abluft erreicht werden soll.

Die vorliegende Erfindung vermeidet die genannten Nachteile des Standes der Technik aufgrund einer Kombination von zwei verschiedenen, hintereinander geschalteten absorptiv arbeitenden Verfahrensstufen. In der ersten, an sich bekannten Verfahrensstufe mit geschlossenem Absorptionsmittel-Kreislauf wird die zu behandelnde Abluft von unten in eine mit einem geeigneten Waschöl gefüllte Absorptionskolonne geleitet.

Im Gegenstrom zu der zu behandelnden Abluft wird die regenerierte Absorptionsflüssigkeit am Kopf der Kolonne zugegeben. Durch einen mittels geeigneter Packmittel intensivierbaren Austauschprozess wird die Absorptionsflüssigkeit mit den organischen Bestandteilen des zu reinigenden Luftstroms beladen. Anschließend wird sie in einem Wärmetauscher aufgewärmt und der Regenerationskolonne zugeführt. Bei erhöhter Temperatur und vermindertem Druck erfolgt die Regeneration rektifikativ. Das abgereicherte Absorptionsmittel wird anschließend wieder der Absorptionskolonne zugeführt.

Die vorgereinigte Abluft aus der ersten Waschkolonne wird anschließend einer zweiten Waschkolonne zugeführt. Um den erforderlichen hohen Geruchsminderungsgrad zu erreichen, wird das darin enthaltene Absorptionsmedium nicht in einem weiteren Kreislaufprozess abgereichert, sondern vielmehr durch Ausschleusung einer bestimmten, sich nach den jeweiligen Zielvorgaben (zum Beispiel Abluftgrenzwerten) orientierenden Mengen an beladenem Absorptionsmedium und Ersatz desselben durch frisches Absorptionsmittel aus einem Vorratsbehälter ergänzt. Das ausgeschleuste beladene Absorptionsmedium kann anschließend zum Zwecke der Energiegewinnung unter Ersatz herkömmlicher Energieträger in geeigneten Anlagen verbrannt werden.

Die vorliegende Erfindung erlaubt, im Gegensatz zu Absorptionsstufen mit thermisch unterstützter Regeneration, in ihrer zweiten Stufe den Einsatz von physikalisch-chemisch weniger stabilen Absorptionsmedien, beispielsweise den Einsatz von Pflanzenölen, die in aller Regel wesentlich preisgünstiger sind als herkömmliche synthetische Waschöle. Darüber hinaus sind diese physikalisch-chemisch weniger stabilen Absorptionsmedien auch bei biologisch schlecht abbaubaren Geruchsträgern anwendbar, unter der Voraussetzung, daß diese von den Waschmedien ausreichend absorbiert werden.

Demgemäß besteht eine erste Ausführungsform der vorliegenden Erfindung in einem Verfahren zur Abtrennung von organischen Komponenten aus Abluft, wobei man in einer ersten Abtrennungsstufe die Abluft mit einem hochsiedenden Waschöl I in Kontakt bringt und das mit organischen Komponenten beladene Waschöl I regeneriert, dadurch gekennzeichnet, daß man in einer zweiten Abtrennungsstufe den Abluftgasstrom der ersten Abtrennungsstufe mit einem weiteren Waschöl II in Kontakt bringt und das beladene Waschöl II aus dem Verfahren ausschleust.

Mit Hilfe der vorliegenden Erfindung ist es in besonders geeigneter Weise möglich, störende Gerüche aus Abluft unter die Wahrnehmungsgrenze zu vermindern.

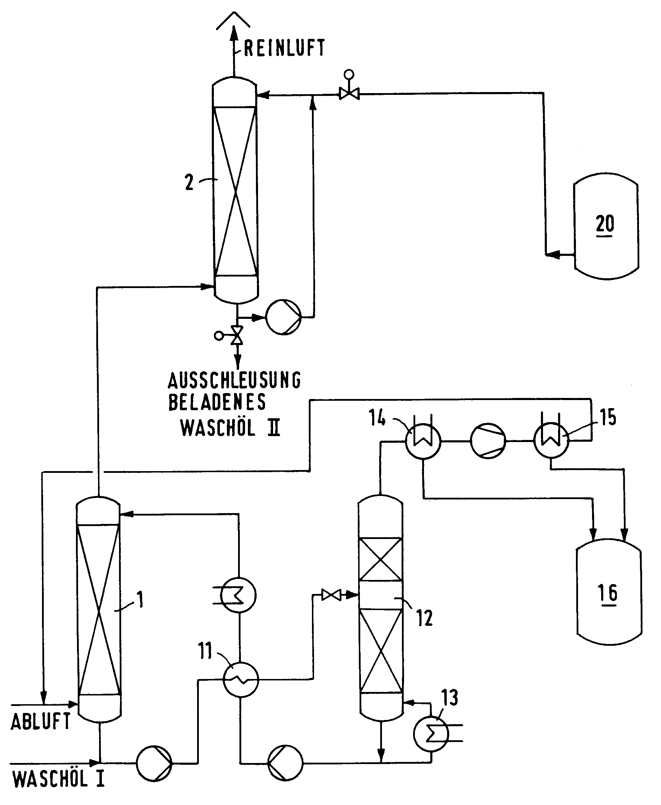

Gemäß der Figur wird Abluft zunächst in eine mit einem geeignetem Waschöl I gefüllte Absorptionskolonne (1) geleitet. Im Gegenstrom dazu wird die regenerierte Absorptionsflüssigkeit am Kopf der Kolonne 1 zugegeben. Zur Erhöhung des Wärmestoffaustausches ist es an sich bekannt, die Kolonne 1 mit verschiedenen geeigneten Packmitteln zu beladen. Die mit Absorptionsflüssigkeit und organischen Bestandteilen des zu reinigenden Luftstroms beladene Absorptionsflüssigkeit verläßt die Kolonne 1 beispielsweise am Boden und wird über einen Wärmetauscher 11 einer zweiten Kolonne 12 zugeführt. Die am Kopf der Kolonne 12 anfallenden Gase/Dämpfe werden über die Kondensatoren 14 und 15, gegebenenfalls nach Durchgang durch einen Verdichter, in flüssiger Form abgeschieden und beispielsweise im Lösungsmittelbehälter 16 gesammelt.

Das gereinigte Waschöl I kann dann wieder in die Kolonne 1 zurückgeführt werden. Die vorgereinigte Abluft aus der Kolonne 1 wird anschließend der zweiten Waschkolonne 2 zugeführt. Darüber hinaus wird aus einem Vorratsbehälter 20 ein gegebenenfalls von dem Waschöl I verschiedenes Waschöl II der Kolonne 2 zugeführt. Diese Kolonne 2 kann ebenfalls wie die Kolonne 1 verschiedene Packkörper enthalten.

Das nun mit den organischen Komponenten des Restgases beladene Waschöl II wird ohne Regeneration solange im Kreislauf geführt, bis die jeweiligen Zielvorgaben erschöpft sind. Gegebenenfalls wird das Absorptionsmittel durch frisches Waschöl II aus dem Vorratsbehälter 20 ergänzt. Falls erforderlich, kann die dabei ausgeschleuste Menge an Waschöl II bis zu 100 % betragen, wobei dann die in der Figur dargestellte Kreislaufführung eines Teilstromes in der Kolonne 2 entfallen würde.

Waschöle zur Verwendung in der Kolonne 1 sind an sich im Stand der Technik bekannt. Demgemäß besteht eine bevorzugte Ausführungsform des erfindungsgemäßen Verfahrens darin, daß man in der ersten Abtrennungsstufe ein hochsiedendes Waschöl, ausgewählt aus Silikonöl, Phthalsäuredialkylester kurzkettiger Alkohole mit 1 bis 8 C-Atomen, insbesondere 1 bis 2 C-Atomen und Polyethylenglycoldialkylether kurzket-tiger Alkohole mit 1 bis 4 C-Atomen, insbesondere 1 bis 2 C-Atomen einsetzt. Derartige Waschöle sind beispielsweise in dem Artikel von T. Pilhofer beschrieben. Die genannten Verbindungen sind von den Stoffeigenschaften und insbesondere vom Siedepunkt bzw. der Dampfdruckkurve sowie der Viskosität dieser Verbindungen von besonderer Bedeutung. Die Viskosität bestimmt wesentlich die Stoffaustauschgeschwindigkeit bei der Absorption und der Regeneration sowie die Wärmeübertragunggeschwindigkeit in den Wärmetauschern. Mit Zunahme der Viskosität nehmen die Kolonnenhöhen bei vergleichbarer Trennwirkung sowie die Wärmetauscherflächen bei gleichem Rückgewinnungsumfang zu.

Demgemäß liegen die Siedepunkte der gemäß der vorliegenden Erfindung vorzugsweise einsetzbaren Waschöle I bei Umgebungsdruck in einer Größenordnung von 300 bis 340C. Dieser Bereich stellt jedoch einen Kompromiß dar zwischen einer noch mit vertretbarem Aufwand machbaren destillativen Regeneration und möglichst geringem Partialdruck bei Absorptionstemperatur.

Für die erfindungsgemäß einzusetzende Kolonne 2 kann ein physikalisch-chemisch weniger stabiles Waschöl II gegenüber dem Absorptionsmedium in der Kolonne 1 eingesetzt werden. Besonders bevorzugt im Sinne der vorliegenden Erfindung ist es, natürliches oder synthetisches Waschöl II einzusetzen, das ausgewählt ist aus Pflanzenölen, Pflanzenölderivaten, technischen Kohlenwasserstoffgemischen, höheren Alkoholen oder Estern. In der Regel sollten die Siedebereiche des Waschöls II im Bereich des Waschöls I liegen, damit die Abluft nicht durch neue organische Belastung befrachtet wird. Auch sollte während des Stippens kein Massenverlust oder allenfalls ein geringer Massenverlust auftreten.

Die vorgenannten, physikalisch-chemisch weniger stabilen Absorptionsmedien sollten gegenüber den Waschölen I preisgünstig und darüber hinaus auch ohne weiteres der Verbrennung zugänglich sein. Demgemäß besteht eine bevorzugte Ausführungsform der vorliegenden Erfindung darin, das mit organischen Komponenten beladene Waschöl II der zweiten Abtrennungsstufe der Verbrennung zuzuführen. Hierbei werden dann die Reste an organischen Komponenten der Abluft vollständig vernichtet.

## Patentansprüche

1. Verfahren zur Abtrennung von organischen Komponenten aus Abluft, wobei man in einer ersten Abtrennungsstufe (1) die Abluft mit einem hochsiedendem Waschöl (I) in Kontakt bringt und das mit organischen Komponenten beladene Waschöl (I) regeneriert, dadurch gekennzeichnet, daß man in einer zweiten Abtrennungsstufe (2) den Abluftgasstrom der ersten Abtrennungsstufe mit einem weiteren Waschöl (II) in Kontakt bringt und das beladene Waschöl (II) aus dem Verfahren ausschleust.

2. Verfahren nach Anspruch 1, dadurch gekennzeichnet, daß man in der ersten Abtrennungsstufe (1) ein hochsiedendes Waschöl (I), ausgewählt aus Silikonöl, Phthalsäuredialkylester kurzkettiger Alkohole mit 1 bis 8 C-Atomen, insbesondere 1 bis 2 C-Atomen und Polyethylenglycoldialkylether kurzkettiger Alkohole mit 1 bis 4 C-Atomen, insbesondere 1 bis 2 C-Atomen einsetzt.

3. Verfahren nach Anspruch 1, dadurch gekennzeichnet, daß man in der zweiten Abtrennungsstufe (2) eine natürliches oder synthetisches Waschöl (II) einsetzt, daß ausgewählt ist aus Pflanzenölen, Pflanzenölderivaten, technischen Kohlenwasserstoffen, höheren Alkoholen und Estern.

4. Verfahren nach Anspruch 1, dadurch gekennzeichnet, daß man das weitere, mit organischen Komponenten beladene Waschöl (II) der zweiten Abtrennungsstufe (2) der Verbrennung zuführt.
